# EUROPÄISCHE PATENTANMELDUNG

(11) **EP 1 369 198 A2**
(43) Veröffentlichungstag der Anmeldung: **10.12.2003**
(21) Anmeldenummer: 03007566.7
(22) Anmeldetag: 02.04.2003
(51) Int. Cl.: B23Q 7/00, B23Q 7/04, B23Q 7/08, B23Q 39/02, B23B 3/16

(54) **Verfahren zum Betreiben einer mehrachsigen CNC-Mittenantriebs-Drehmaschine**

(30) Priorität: 04.06.2002 DE 10224915
(71) Anmelder: Werkzeugmaschinenbau Sinsheim GmbH, 74889 Sinsheim (DE)
(72) Erfinder: Hoffmann, Hans-Otto, 74889 Sinsheim (DE); Tunkel, Franz, 35394 Giessen (DE)
(74) Vertreter: Seewald, Jürgen, Dipl.-Ing.

(57) **Zusammenfassung**

Die vorliegende Erfindung betrifft ein Verfahren zum Betreiben einer mehrachsigen CNC-Mittenantriebs-Drehmaschine mit einem direkt angetriebenen Mittenantriebskopf (16) und beidseitig von diesem vorgesehenen, x- und z-Bearbeitungsachsen aufweisenden Werkzeugträger-Schlitten (7, 9; 8, 10). Aufgabe der Erfindung ist es, eine derartige Drehmaschine so zu verbessern, dass die Nebenzeiten für das Werkstück-Handling wesentlich verringert werden. Gelöst wird diese Aufgabe dadurch, dass die x- und z-Bearbeitungsachsen als Roboterachsen zur Werkstückbe- und-entladung des Mittenantriebskopfes (16) genutzt werden.

## Beschreibung

Die vorliegende Erfindung betrifft ein Verfahren zum Betreiben einer Mittenantriebsdrehmaschine gemäß dem Oberbegriff des Anspruchs 1.

Mittenantriebsdrehmaschinen wurden entwickelt, um beide Enden eines Werkstückes in einer Aufspannung zu bearbeiten. In erster Linie handelt es sich hier um zu bearbeitende Wellenteile, die in etwa Werkstückmitte eine Spannung zulassen. Gegenüber nacheinanderfolgenden Bearbeitungsschritten entfällt die Zeit für Maschinenerhalt, Werkstückspannen, Werkstückwenden, Neueinspannen und Maschinenlauf. Von besonderer Bedeutung ist auch die erreichbare Koaxialität der beiden Werkstückenden, da das Werkstück nur einmal gespannt wird. Ein Beispiel für eine Mittenantriebsdrehmaschine ist in DE 36 09 571 A1 zu finden.

Nach dem Stand der Technik werden Mittenantriebsdrehmaschinen durch externe Roboter, die insbesondere als Portallade-Roboter ausgeführt sind, beschickt. Diese Roboter entnehmen auch die fertigbearbeiteten Werkstücke aus der Maschine. Nachteilig an diesen externen Robotern ist, dass sie sehr genau programmiert werden müssen, um ein störungsfreies Handling der Werkstücke zu gewährleisten. Zudem erhöhen sie die Nebenzeiten, da das Maschinengehäuse zunächst geöffnet werden muß, damit die Ladewagen des Roboters an die Bearbeitungsstelle gelangen können. Darüber hinaus sind die Fahrwege der Ladewagen des Roboters relativ groß, was ebenfalls zur Erhöhung der Nebenzeiten beiträgt.

Aufgabe der vorliegenden Erfindung ist es, ein Verfahren zum Betreiben einer mehrachsigen CNC-Mittenantriebsdrehmaschine gemäß dem Oberbegriff des Anspruchs 1 zur Verfügung zu stellen, welches die Nebenzeiten für das Werkstückhandling wesentlich verringert.

Diese Aufgabe wird erfindungsgemäß durch ein Verfahren mit den Merkmalen des Anspruchs 1 gelöst. Die vorliegende Erfindung nutzt also die x- und z-Bearbeitungsachsen der Maschine gleichzeitig als Roboterachsen für das Werkstückhandling, wodurch ein interner Roboter geschaffen wird. Da sich die x- und z-Bearbeitungsachsen naturgemäß in unmittelbarer Nähe der Bearbeitungsstelle befinden, können die Nebenzeiten für das Werkstückhandling im Vergleich zum Stand der Technik wesentlich reduziert werden, insbesondere ist auch ein Öffnen des Maschinengehäuses nicht mehr erforderlich. Ein weiterer Vorteil ist darin zu sehen, dass der Roboter aufgrund der Nutzung der x- und z-Bearbeitungsachsen hochgenau arbeitet.

Eine vorteilhafte Ausgestaltung des erfindungsgemäßen Verfahrens ergibt sich aus dem Unteranspruch.

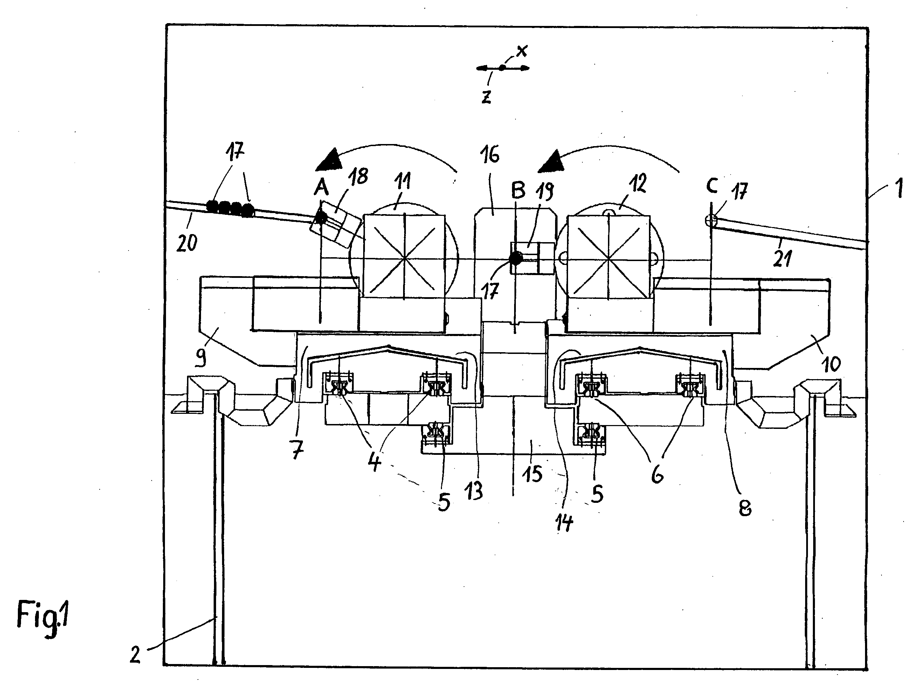

Die Erfindung wird nachstehend anhand eines Ausführungsbeispiels näher erläutert. In der dazugehörigen Zeichnung zeigen die Fig. 1 - 3 einen schematischen Querschnitt durch eine Mittenantriebsdrehmaschine in verschiedenen Handlingpositionen von Werkstücken.

Die dargestellte Mittenantriebsdrehmaschine besitzt ein Gehäuse 1. Dieses ist mit durch Türen verschließbare Zugangsöffnungen zur eigentlichen Bearbeitungseinheit ausgestattet. Die Türen dienen dem Spritzschutz gegen Kühl- und Schmierflüssigkeit sowie Späne sowie dem weiteren Arbeitsschutz, um eine Berührung des Bedieners mit bewegten Teilen der Maschine zu verhindern.

Die Mittenantriebsdrehmaschine besitzt ein Maschinenbett 2, welches drei Längsführungsbahnen 4, 5 und 6 trägt. Auf den beiden äußeren Führungsbahnen 4 und 6 laufen Bettschlitten 7 bzw. 8, die ihrerseits Planschlitten 9 bzw. 10 tragen, welche mit Revolverköpfen 11 bzw. 12 ausgestattet sind. Die x- und z-Bearbeitungsachsen der Mittenantriebsdrehmaschine sind durch die Längsverschiebung der Bettschlitten 7 und 8 bzw. durch die Querverschiebung der Planschlitten 9 und 10 gegeben. Die Bearbeitungsachsen sind im oberen Bereich des Gehäuses 1 symbolisch eingezeichnet. Aus dieser Symbolik geht hervor, dass die z-Achse in der Zeichnungsebene und die x-Achse quer zur Zeichnungsebene liegt. Um die Führungsbahnen 4 und 6 gegen Verschmutzung zu schützen, sind diese mit dachförmigen Überbauten 13 bzw. 14 versehen.

Ein derartiger Schutz ist für die mittlere Führungsbahn 5 nicht erforderlich, da diese unter die Führungsbahnen 4 und 6 gehängt und damit wirksam gegen Verschmutzung geschützt ist. Die Führungsbahn 5 trägt auf ihrem Bettschlitten 15 das Kernstück der Mittenantriebsdrehmaschine, den Mittenantriebskopf 16. Dieser dient dem Einspannen eines Werkstücks 17 sowie gleichzeitig zu dessen Drehantrieb. Das Werkstück 17 ragt auf beiden Seiten (x-Achse) aus dem Mittenantriebskopf 16 heraus und ist in einer als Hohlspindel ausgeführten Bearbeitungsspindel gespannt, so dass beide Werkstückenden durch in die Revolverköpfe 11 und 12 eingebaute Werkzeuge bearbeitet werden können. Die Revolverköpfe 11, 12 tragen jeweils an einem ihrer Werkzeugplätze einen Greifer 18 bzw. 19.

Nach dem Bearbeiten eines Werkstücks 17 mit den Bearbeitungskreuzschlitten 7, 9 und 6, 8 werden die aufgebauten Revolverköpfe 11, 12 von der Bearbeitungsposition auf eine Handlingsposition geschwenkt, in der ihre Greifer 18, 19 zum Einsatz kommen, und die x- und z-Bearbeitungsachsen als Roboterachsen genutzt, die das Werkstück 17 durch die Mittenantriebsdrehmaschine handeln. Dieses Handling wird nachstehend anhand der Figuren 1 - 3 näher erläutert.

Die Werkstücke 17 werden der Mittenantriebsdrehmaschine, genauer gesagt, ihrer innerhalb des Gehäuses 1 befindlichen Beladeposition A, über eine schräge Zulaufbahn 20 unter Schwerkraftwirkung zugeführt. Der Revolverkopf 11 hat den Greifer 18 auf die Beladeposition A geschwenkt und greift ein Werkstück 17. Gleichzeitig schwenkt der Revolverkopf 12 den Greifer 19 zur Bearbeitungsspindel B, um ein fertigbearbeitetes Werkstück 17 zu ergreifen. Zum Ergreifen des Werkstücks 17 muß zunächst eine Zustellbewegung des Planschlittens 10 in z-Richtung erfolgen. Anschließend erfolgt eine Bewegung des Bettschlittens 6 in der x-Bearbeitungsachse , um das Werkstück 17 aus der Bearbeitungsspindel B zu ziehen. Diese geschilderte Situation ist in Fig. 1 gezeigt.

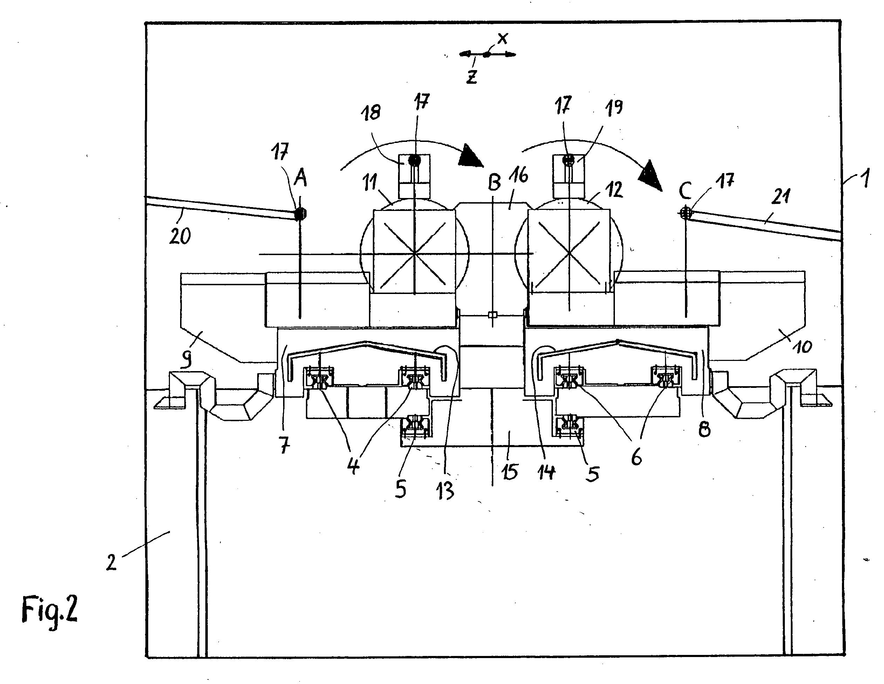

Im nächsten Handlingschritt, der in Fig. 2 dargestellt ist, werden beide Revolverdrehköpfe 11 und 12 in Uhrzeigerrichtung dreht. Gleichzeitig erfolgt eine Zustellbewegung des Planschlittens 9 in der z-Bearbeitungsachse, um eine Zuführung des in der Beladeposition A ergriffenen Werkstücks 17 durch den Greifer 18 direkt vor die Bearbeitungsspindel B zu erreichen.

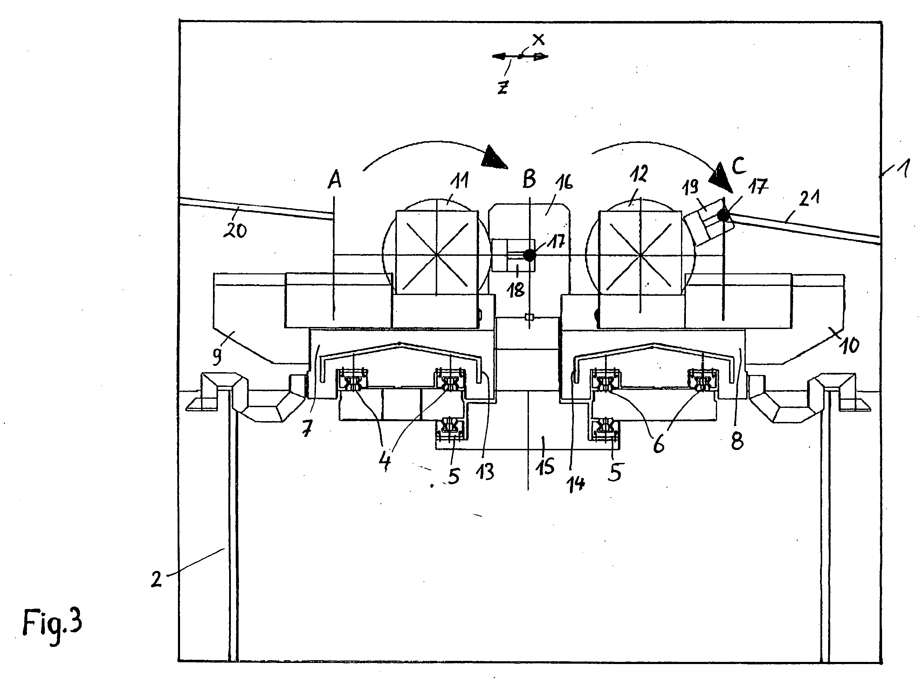

Im nächsten Handlingsschritt gemäß Fig. 3 erfolgt ein Vorschub des Bettschlittens 7 in der x-Bearbeitungsachse, so dass das im Greifer 18 befindliche Werkstück 17 in die Bearbeitungsspindel B eingeschoben und dort für den nächsten Bearbeitungsgang gespannt werden kann. Gleichzeitig erfolgt eine Zustellbewegung des Planschlittens 10 in z-Bearbeitungsachse, um den Revolverkopf 12 näher an die Entladeposition C heranzubringen, damit der Greifer 19 das Werkstück 17 dort ablegen kann. Das abgelegte Werkstück 17 verläßt die Mittenantriebsdrehmaschine über eine schräge Ablaufbahn 21.

Im vorstehenden Ausführungsbeispiel werden die Werkstücke 17, bezogen auf die Zeichnung, von links nach rechts durch die Maschine gehandelt. Ein umgekehrtes Handling, also von rechts nach links, ist ohne große Umstellungen möglich. Hierzu muss lediglich die Neigung der Laufbahnen 20, 21 entsprechend geändert werden.

## Patentansprüche

1. Verfahren zum Betreiben einer mehrachsigen CNC-Mittenantriebsdrehmaschine mit einem direkt angetriebenen Mittenantriebskopf (16) und beidseitig von diesem vorgesehenen, x- und z-Bearbeitungsachsen aufweisenden Werkzeugträgerschlitten (7, 9; 8, 10), **dadurch gekennzeichnet, dass** die x- und z-Bearbeitungsachsen als Roboterachsen zu Werkstückbe- und Entladung des Mittenantriebkopfes (16) genutzt werden.

2. Verfahren nach Anspruch 1, **dadurch gekennzeichnet, dass** die Werkzeugträgerschlitten (7, 9; 8, 10) mit Revolverköpfen (11, 12) ausgestattet sind, die jeweils in einem Werkzeugplatz einen Greifer (18, 19) für die Werkstücke (17) tragen, wobei der Greifer (18) des einen Revolverkopfes (11) der Beladung und der Greifer (19) des anderen Revolverkopfes dem Entladen des Mittenantriebskopfes (16) dient.
